# EUROPÄISCHE PATENTSCHRIFT

(11) **EP 0 745 642 B1**
(45) Veröffentlichungstag und Bekanntmachung des Hinweises auf die Patenterteilung: **08.12.1999**
(21) Anmeldenummer: 96107971.2
(22) Anmeldetag: 20.05.1996
(51) Int. Cl.: C08K 3/16, C08K 3/00, C08K 3/32

(54) **Thermostabile, witterungsbeständige Polyamidformmassen**
Thermostable, weathering resistant polyamide moulding compositions
Compositions de moulage de polyamide thermostabiles et résistant aux intempéries

(30) Priorität: 31.05.1995 DE 19519820
(43) Veröffentlichungstag der Anmeldung: 04.12.1996
(73) Patentinhaber: BAYER AG, 51368 Leverkusen (DE)
(72) Erfinder: Gittinger, Andreas, Dr., 47800 Krefeld (DE); El-Sayed, Aziz, Dr., 51735 Leverkusen (DE); Ostlinning, Edgar, Dr., 40237 Düsseldorf (DE); Lange, Ralf, Dr., 47800 Krefeld (DE)

(56) Entgegenhaltungen:
- EP-A- 0 612 794
- DE-A- 2 516 565
- DE-A- 2 924 024
- GB-A- 934 513
- GB-A- 1 140 047
- US-A- 2 705 227

## Beschreibung

Die Erfindung betrifft thermostabile, witterungsbeständige Polyamidformmassen. Die Stabilisierung wird durch gleichzeitige Anwesenheit von Kupfer, eines oder mehrerer Halogene und Phosphor in der Formmasse erreicht.

Zur Stabilisierung von Polyamidformmassen gegen thormooxidativen oder photooxidativen Abbau sind zahlreiche Systeme bekannt. Eine Zusammenfassung findet sich im "Kunststoffhandbuch Band 4: Polyamide" (Herausgeber: R. Vieweg und A. Müller, Carl Hanser Verlag, München 1966) auf den Seiten 238 bis 241. Zu den bekannten Stabilisatorsystemen gehören phenolische Antioxidantien, Antioxidantien auf Basis aromatischer Amine, sowie Kupferverbindungen. Insbesondere Gemische aus Kupferhalogeniden und Alkalihalogeniden haben sich als effektive Stabilisatoren gegen Thermooxidative und photooxidative Alterung erwiesen. Die Gemische aus Kupferhalogeniden und Akalihalogeniden sind in ihrer Stabilisierungswirkung den anderen genannten Stabilisierungssytemen überlegen.

Über die genannten Systeme hinaus sind weitere Stoffgemische zur Stabilisierung von Polyamiden gegen Thermooxidativen oder photooxidativen Abbau beschrieben worden. Die US-Patentschrift 2 705 227 beschreibt ein ternäres Stabilisatorsystem bestehend aus einer Kupferverbindung, einer Halogenverbindung und einer Phosphorsäure oder eines Alkalisalzes einer Phosphorsäure.

Die britische Patentmeldung 1 140 047 beschreibt ein ternäres Stabilisatorsystem aus einem Kupfersalz, phosphoriger oder hypophosphoriger Säure oder einer Verbindung dieser Säuren und einem Alkalihalogenid. Dem beanspruchten ternären Stabilisatorsystem ist die Beschränkung auferlegt, daß die Phosphorverbindung in höchstens der halben molaren Menge des eingesetzten Kupfersalzes eingesetzt wird. Wird als Phosphorverbindung hypophosphorige Säure verwendet, so darf gemäß der britischen Patentanmeldung 1 140 047 diese höchstens zu einem Viertel der molaren Konzentration des eingesetzten Kupfersalzes verwendet werden. Die Phosphorverbindung wird in dem zitierten molaren Unterschuß in Bezug auf die zugesetzte Kupfermenge zugegeben, um eine helle Farbe der Polyamidformmasse zu erhalten.

Die deutsche Offenlegungsschrift 2 107 406 beschreibt ein ternäres Stabilisatorsystem bestehend aus Kupferstearat, Kaliumjodid und Manganohypophosphit. Die mit dieser Mischung stabilisierten Formmassen werden als farblos beschrieben.

Die EP-A 0 612 749 beschreibt stabilisierte Polyamidformmassen, die als Stabilisator sowohl einen ionischen oder komplexen Kupferstabilisator, als auch gleichzeitig elementares, fein disperses Kupfer enthalten.

Die bekannten Stabilisatorsysteme verzögern die thermooxidative und die photooxidative Alterung von Polyamidformmassen. Neue Anwendungen erhöhen die Anforderungen an die Stabilität von Polyamidformmassen gegenüber thermooxidativem oder photooxidativem Abbau. Dies gilt z.B. für die Anwendung von Polyamidformmassen im Motorraum von Automobilen. In diesem und auch in anderen Bereichen sind die Polyamidformmassen einer starken Temperaturbelastung über lange Zeiträume ausgesetzt. Eine weitergehende Stabilisierung über das mit den bekannten Stabilisatorsystemen erreichbare Maß hinaus ist deshalb erforderlich.

Es wurde nunmehr gefunden, daß Polyamid-Formmassen miteinem Stabilisatorsystem eines Gemisches aus einem Kupferhalogenid, einer Halogenverbindung und hypophosphoriger Säure oder eines Alkali- oder Erdalkalisalzes dieser Säure in einem bestimmten molaren Verhältnis zueinander eine sehr gute Stabilisierung gegen thermooxidative und photooxidative Alterung aufweisen.

Gegenstand der Erfindung sind daher thermoplastische Polyamid-Formmassen, enthaltend als Stabilisator ein Gemisch aus einem Kupferhalogenid, einer oder mehreren Halogenverbindungen, vorzugsweise Natrium- oder Kaliumjodid, und hypophosphoriger Säure oder eines Alkali- oder Erdalkalisalzes dieser Säure, wobei die einzelnen Komponten des Stabilisatorgemisches in einer solchen Menge zugesetzt werden, daß die in der Formmasse enthaltene molare Menge an Halogen größer oder gleich der sechsfachen molaren Menge und kleiner oder gleich der fünfzehnfachen, vorzugsweise zwölffachen, molaren Mengen des in der Formmasse enthaltenen Kupfers und die molare Menge an Phosphor größer oder gleich der molaren Menge und kleiner oder gleich der zehnfachen, vorzugsweise fünffachen molaren Menge des in der Formmasse enthaltenen Kupfers beträgt.

Gegenstand der Erfindung ist weiterhin die Verwendung eines Gemisches aus einem Kupferhalogenid, einer oder mehrerer Halogenverbindungen und hypophosphoriger Säure oder eines Alkali- oder Erdalkalisalzes dieses Säure als Stabilisator für Polyamidformmassen, dadurch gekennzeichnet, daß die in der Formmasse enthaltene molare Menge an Halogen größer oder gleich der sechsfachen molaren Menge und kleiner oder gleich der fünfzehnfachen, vorzugsweise zwölffachen, molaren Menge des enthaltenen Kupfers ist und die in der Formmasse enthaltene molare Menge an Phosphor größer oder gleich der molaren Menge und kleiner oder gleich der zehnfachen, vorzugsweise fünffachen, molaren Menge des erhaltenen Kupfers sein.

Der Kupfergehalt in der Formmasse beträgt im allgemeinen 0,001 bis 1 Gew.-% (entsprechend 0,0157 bis 15,7 mmol Kupfer), bezogen auf das Gewicht der Gesamtformmase, d.h. unter Gesamtformmasse ist das Polyamid inclusive Stabilisator und gegebenenfalls zugesetzer Zusatzstoffe zu verstehen.

Bevorzugt wird 0,003 bis 0,3 Gew.-% Kupfer entsprechend 0,0472 bis 4,72 mmol Kupfer) eingesetzt.

Besonders bevorzugt wird 0,01 bis 0,5 Gew.-% Kupfer- (I)jodid, Natrium- oder Kaliumjodid zugesetzt, wobei die insgesamt in der Formmasse enthaltene molare Menge an Jod mindestens der sechsfachen und höchstens der zwölffachen molaren Menge des in der Formmasse enthaltenen Kupfers entspricht, und Natriumhypophosphit oder Natriumhypophosphit-Monohydrat in einer solchen Menge zugegeben wird, daß die in der Formmasse enthaltene molare Menge Phosphor mindestens gleich der molaren Menge des in der Formmasse enthaltenen Kupfers und höchstens gleich der fünffachen molaren Menge des in der Formmasse enthaltenen Kupfers ist.

Als Polyamide werden in den thermoplastischen Polyamidformmassen im allgemeinen aliphatische Polyamide oder Polyamide mit überwiegend aliphatischem Anteil eingesetzt. Bevorzugt sind Polyamid 6 oder Polyamid 66 oder Copolyamide von Polyamid 6 mit Diaminen (bevorzugt C₄-C₁₆-, insbesondere C₄-C₈-Alkylendiaminen) C₄-C₈-Alkylendicarbonsäuren) und Dicarbonsäuren (bevorzugt C₄-C₁₂-, insbesondere oder Polyamide 66 mit einem Comonomerenanteil von höchstens 20 Gew.-%.

Die erfindungsgemäßen Polyamidformmassen können Zusatzstoffe enthalten. Zusatzstoffe können zum Beispiel sein: faser- oder teilchenförmige Füll- oder Verstärkungsstoffe wie z.B. Glasfasern, Glaskugeln oder mineralische Füllstoffe; Verarbeitungshilfsmittel wie z.B. Schmiermittel, Nukleierungsmittel; Flammschutzmittel; Schlagzähmodifikatoren wie z.B. Polyolefine oder andere Kautschuke; Stoffe, die der Farbgebung dienen oder andere übliche Zusatzstoffe. Die Zusatzstoffe werden in den üblichen Mengen zugesetzt. Füll- und Verstärkungsstoffe sowie Schlagzähmodifikatoren werden im allgemeinen in einer Menge von bis zu 60, vorzugsweise 5 bis 40 Gew.-%. zugesetzt.

Die Zugabe der Stoffe, die der Stabilisierung der Formmasse dienen, kann auf verschiedene Weise erfolgen. Die Stabilisatoren können z.B. den Monomeren vor oder während der Polymerisation zugegeben werden. Die Stabilisatoren können z.B. dem Polymeren vor, gleichzeitig oder nach der Zugabe der anderen Zusatzstoffe zugegeben werden. Dabei können die Stabilisatoren z.B. mittels eines Extruders oder auf andere Weise in die Polymerschmelze eingearbeitet werden. Die Stabilisatoren können aber auch auf die Oberfläche des granulierten oder in anderer Form vorliegenden festen Polymeren oder auf die Oberfläche der festen Formmasse aufgebracht werden. Bevorzugt ist die Einarbeitung der Stabilisatoren in die Polymerschmelze mit einem Extruder.

Die erfindungsgemäßen Polyamidformmassen sind für zahlreiche Anwendungen geeignet. Sie können z.B. zur Herstellung von Fasern, Formkörpern, Halbzeug oder Folien dienen. Die Fasern, Formkörper, Halbzeuge oder Folien können durch Spinnen, Spritzgießen, Extrudieren, Blasformen oder andere übliche Techniken hergestellt werden.

### Beispiele

In der folgenden Tabelle sind die Mengen der Einsatzstoffe in Gew.-% angegeben. Im Falle des Kupfer(I)jodides ist neben der Menge des Kupfer(I)jodides in Gew. -% auch die entsprechende Menge Kupfer in Gew.-% angegeben (1 Gew.-% Kupfer(I)jodid entspricht 0,334 Gew.-% Kupfer). Außerdem ist in Klammern die Menge der Stabilisatorkomponenten in mmol pro 100 g Formmasse angegeben.

Die Einsatzstoffe wurden gemischt und mit einem Zweischneckenkneter (ZSK 32 der Firma Werner und Pfleiderer) extrudiert. Die so erhaltenen Stärnge wurden granuliert. Aus dem Granulat wurden Stäbe der Abmessung 80 mm x 10 mm x 4 mm durch Spritzgießen hergestellt. Diese Stäbe wurden einer Thermoalterung beil 50°C in Luftatmosphäre unterzogen. Der Verlauf der Alterung der Formmasse wurde durch Messen der Schlagzähigkeit nach Izod (aₙ) verfolgt. Die Beispiele 1 bis 6, 10 bis 15 und 19 bis 22 sind Vergleichsbeispiele.

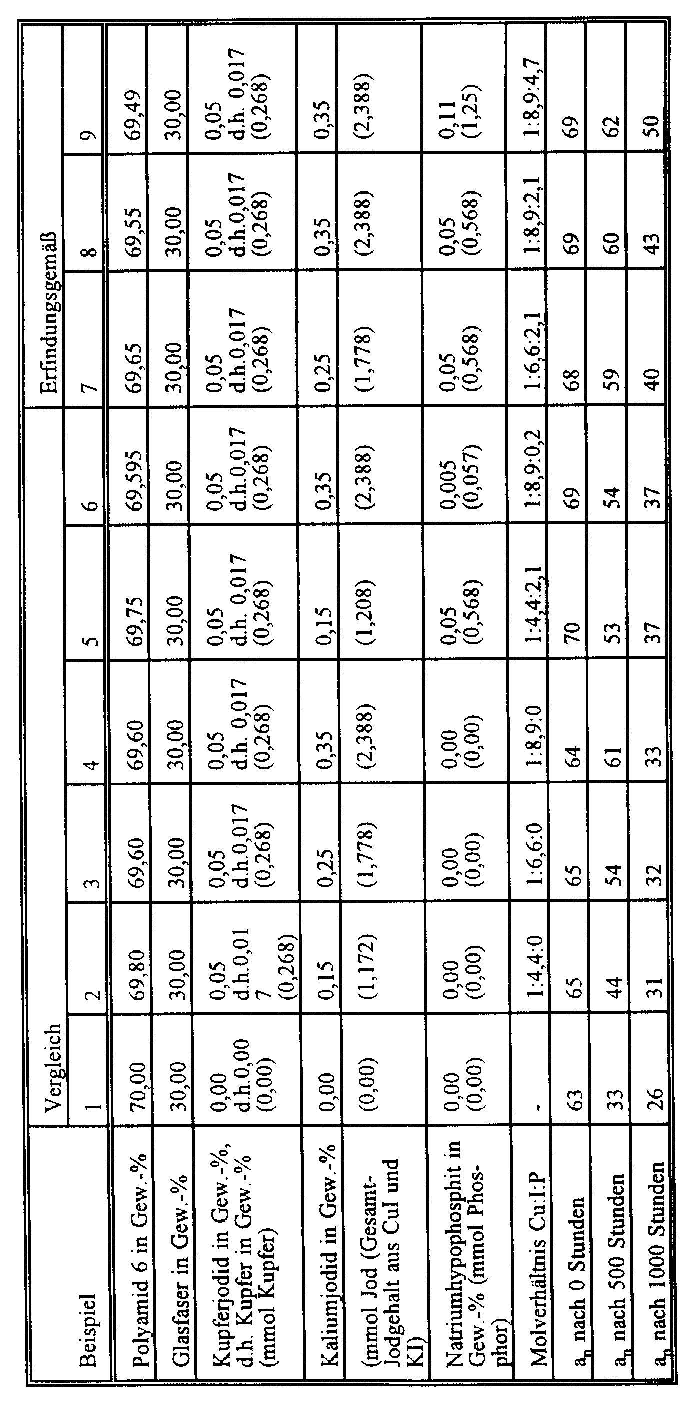

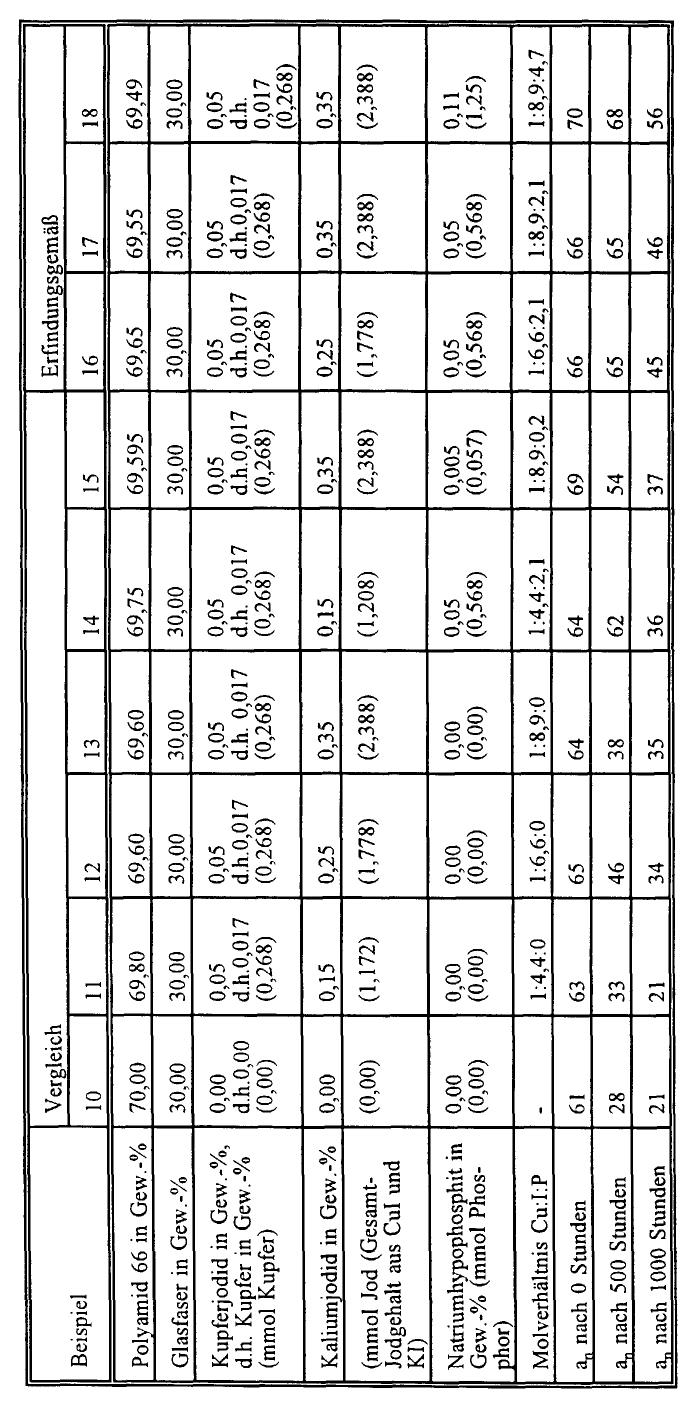

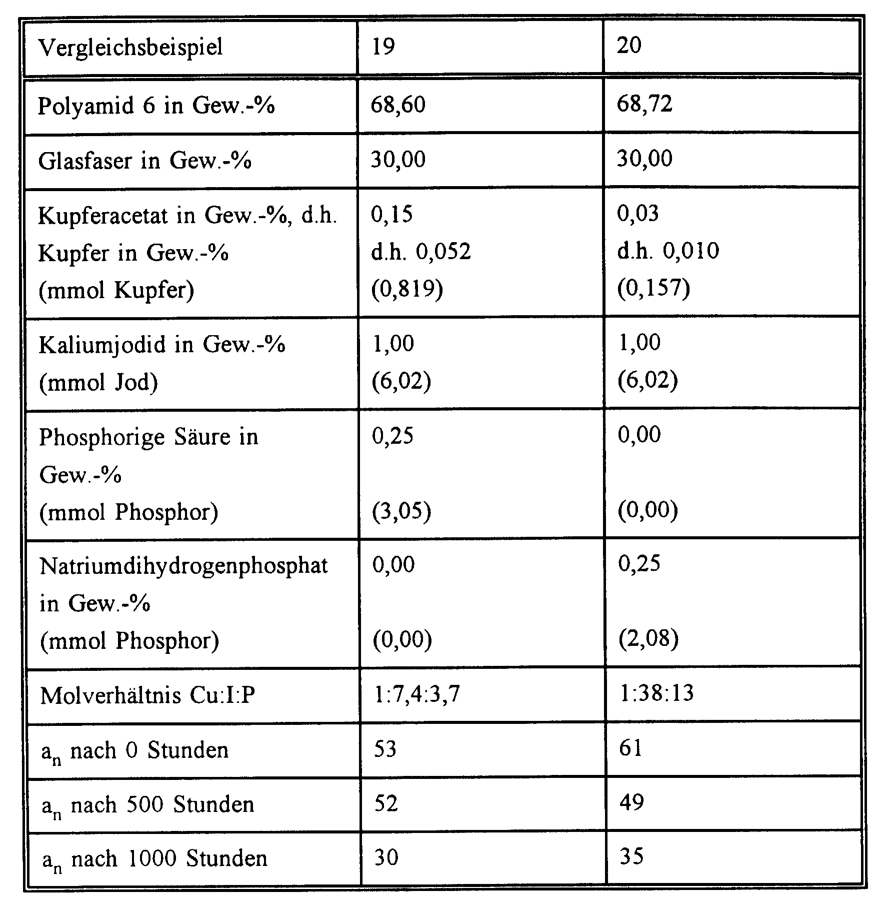

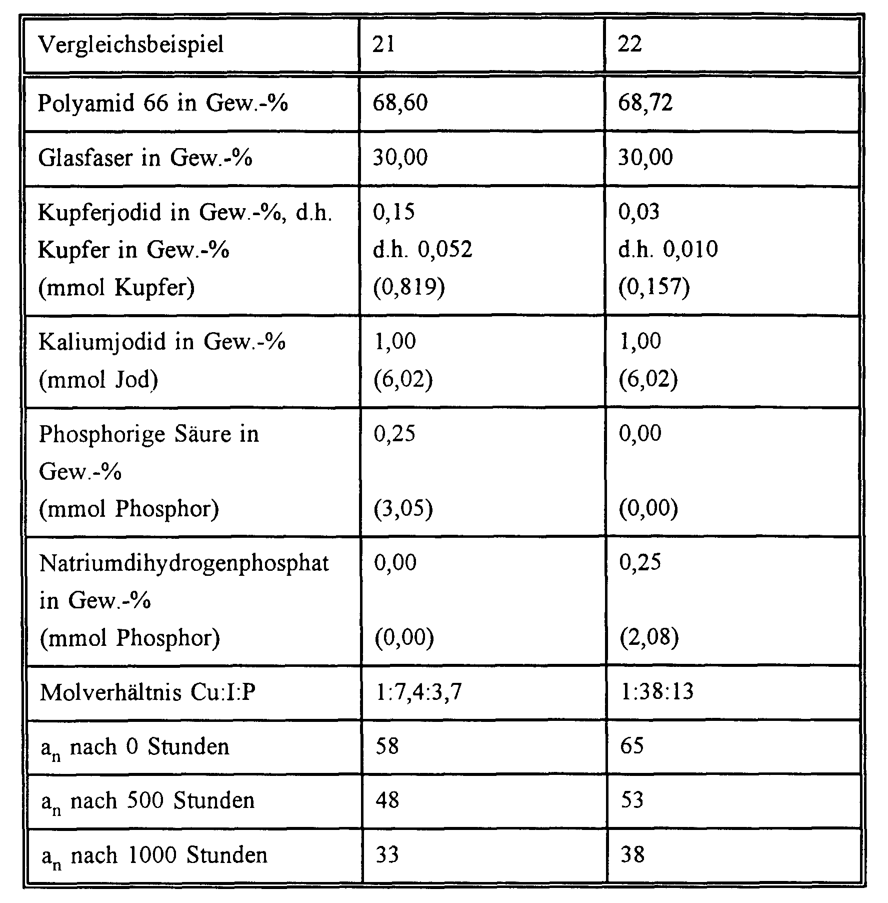

Die Tabellen zeigen, daß der prozentuale Erhalt der Schlagzähigkeit nach 1000 h Alterung von erfindungsgemäßen Beispielen größer ist als bei den Vergleichsbeispielen.

## Patentansprüche

1. Thermoplastische Polyamid-Formmassen, enthaltend als Stabilisator ein Gemisch aus einem Kupferhalogenid, einer oder mehreren Halogenverbindungen und hypophosphoriger Säure oder eines Alkali- oder Erdalkalisalzes dieser Säure, wobei die einzelnen Komponenten des Stabilisatorgemisches in einer solchen Menge zugesetzt werden, daß die in der Formmasse enthaltene molare Menge an Halogen größer oder gleich der sechsfachen molaren Menge und kleiner oder gleich der fünfzehnfachen molaren Menge des in der Formmasse enthaltenen Kupfers und die molare Menge an Phosphor größer oder gleich der molaren Menge und kleiner oder gleich der zehnfachen molaren Menge des in der Formmasse enthaltenen Kupfers beträgt.

2. Polyamid-Formmassen gemäß Anspruch 1, wobei die einzelnen Komponenten des Stabilisatorgemisches in einer solchen Menge zugesetzt werden, daß die in der Formmasse enthaltene molare Menge an Halogen größer oder gleich der sechsfachen molaren Menge und kleiner oder gleich der zwölffachen molaren Menge des in der Formmasse enthaltenen Kupfers und die molaren Menge an Phosphor größer oder gleich der molaren Menge und kleiner oder gleich der fünffachen molaren Menge des in der Formmasse enthaltenen Kupfers beträgt.

3. Polyamid-Formmassen gemäß Anspruch 1, wobei der Kupfergehalt in der Formmasse 0,001 bis 1 Gew.-% beträgt.

4. Polyamid-Formmassen gemäß Anspruch 1, wobei der Kupfergehalt in der Formmasse 0,003 bis 0,3 Gew.-% beträgt.

5. Polyamid-Formmassen gemäß Anspruch 1, wobei als Halogenverbindungen Natrium- und/oder Kaliumjodid verwendet werden.

6. Polyamid-Formmassen gemäß Anspruch 1, die Zusatzstoffe ausgewählt aus Füll- und Verstärkungsstoffen, Verarbeitungshilfsmittel, Flammschutzmittel, Pigmente, Farbstoffe und Schlagzähmodifikatoren enthalten.

7. Verwendung eines Gemisches aus einem Kupferhalogenid, einem oder mehrerer Halogenverbindungen und hypophosphoriger Säure oder eines Alkali- oder Erdalkalisalzes dieser Säure als Stabilisator für Polyamid-formmassen, dadurch gekennzeichnet, daß die in der Formmasse enthaltene molare Menge an Halogen und Phosphor den Mengen gemäß Anspruch 1 entspricht.

## Claims

1. Thermoplastic polyamide moulding compositions containing, as stabiliser, a mixture of a copper halide, one or more halogen compounds and hypophosphorous acid or an alkali or alkaline earth metal salt of this acid, wherein the individual components in the stabiliser mixture are added in amounts such that the molar amount of halogen contained in the moulding composition is greater than or equal to six times the molar amount of and less than or equal to fifteen times the molar amount of copper contained in the moulding composition and the molar amount of phosphorus is greater than or equal to the molar amount of and less than or equal to ten times the molar amount of copper contained in the moulding composition.

2. Polyamide moulding compositions according to claim 1, wherein the individual components in the stabiliser mixture are added in an amount such that the molar amount of halogen contained in the moulding composition is greater than or equal to six times the molar amount of and less than or equal to twelve times the molar amount of copper contained in the moulding composition and the molar amount of phosphorus is greater than or equal to the molar amount of and less than or equal to five times the molar amount of copper contained in the moulding composition.

3. Polyamide moulding compositions according to claim 1, wherein the copper content of the moulding composition is 0.001 to 1 wt.%.

4. Polyamide moulding compositions according to claim 1, wherein the copper content of the moulding composition is 0.003 to 0.3 wt.%.

5. Polyamide moulding compositions according to claim 1, wherein sodium and/or potassium iodide are used as halogen compounds.

6. Polyamide moulding compositions according to claim 1 which contain additives selected from fillers and reinforcing agents, processing aids, flame retardants, pigments, dyes and impact resistance modifiers.

7. Use of a mixture of a copper halide, one or more halogen compounds and hypophosphorous acid or an alkali or alkaline earth metal salt of this acid as a stabiliser for polyamide moulding compositions, characterised in that the molar amounts of halogen and phosphorus contained in the moulding composition correspond to the amounts given in claim 1.

## Revendications

1. Compositions de moulage en polyamide, thermoplastiques, contenant comme stabilisant, un mélange d'un halogénure de cuivre, d'un ou plusieurs composés halogénés et d'acide hypophosphoreux ou d'un sel alcalin ou alcalino-terreux de cet acide, où les composants individuels du mélange stabilisant sont ajoutés en une quantité telle que la quantité molaire d'halogène contenue dans la composition de moulage est supérieure ou égale à six fois la quantité molaire et inférieure ou égale à quinze fois, la quantité molaire du cuivre contenu dans la composition de moulage et la quantité molaire de phosphore est supérieure ou égale à la quantité molaire et inférieure ou égale à dix fois la quantité molaire du cuivre contenu dans la composition de moulage.

2. Compositions de moulage en polyamide suivant la revendication 1, où les composants individuels du mélange stabilisant sont ajoutés en des quantités telles que la quantité molaire d'halogène contenue dans la composition de moulage soit supérieure ou égale à six fois la quantité molaire et inférieure ou égale à douze fois la quantité molaire du cuivre contenu dans la composition de moulage et la quantité molaire de phosphore soit supérieure ou égale à la quantité molaire et inférieure ou égale à cinq fois la quantité molaire du cuivre contenu dans les compositions de moulage.

3. Compositions de moulage en polyamide suivant la revendication 1, où la teneur en cuivre dans la composition de moulage se situe dans l'intervalle allant de 0,001 à 1% en poids.

4. Compositions de moulage en polyamide suivant la revendication 1, où la teneur en cuivre dans la composition de moulage se situe dans l'intervalle allant de 0,003 à 0,3% en poids.

5. Compositions de moulage en polyamide suivant la revendication 1, où l'on utilise comme composé halogéné, de l'iodure de sodium et/ou de potassium.

6. Compositions de moulage en polyamide suivant la revendication 1, qui contiennent des additifs choisis parmi les matières de charge et de renforcement, les aides au traitement, les agents de protection contre les flammes, les pigments, les colorants et les modificateurs de résistance élevée aux chocs.

7. Utilisation d'un mélange d'un halogénure de cuivre, d'un ou plusieurs composés halogénés et d'acide hypophosphoreux ou d'un sel alcalin ou alcalino-terreux de cet acide comme stabilisant pour des compositions de moulage en polyamide, caractérisée en ce que les quantités molaires d'halogène et de phosphore contenues dans les compositions de moulage correspondent aux quantités suivant la revendication 1.
